(19) Europäisches Patentamt / European Patent Office / Office européen des brevets

(11) **EP 2 915 009 B1**

(12) **FASCICULE DE BREVET EUROPEEN**

(45) Date de publication et mention
de la délivrance du brevet:
**14.03.2018 Bulletin 2018/11**

(21) Numéro de dépôt: **13783557.5**

(22) Date de dépôt: **28.10.2013**

(51) Int Cl.:
**G03H 1/04** (2006.01)     **G03H 1/00** (2006.01)
**G03H 1/28** (2006.01)     **G03H 1/26** (2006.01)

(86) Numéro de dépôt international:
**PCT/EP2013/072474**

(87) Numéro de publication internationale:
**WO 2014/067886 (08.05.2014 Gazette 2014/19)**

(54) **SYSTÈME D'IMAGERIE HOLOGRAPHIQUE AUTO-RÉFÉRENCÉ**

SELBSTREFERENZIERTES SYSTEM ZUR HOLOGRAFISCHEN ABBILDUNG

AUTO-REFERENCED HOLOGRAPHIC IMAGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2012 FR 1260353**

(43) Date de publication de la demande:
**09.09.2015 Bulletin 2015/37**

(73) Titulaires:
• **Centre National de la Recherche Scientifique 75016 Paris (FR)**
• **UNIVERSITE DU MAINE, INSTITUT DES MOLECULES ET MATERIAUX DU MANS (IMMM- UMR 6283) 72085 Le Mans Cedex 9 (FR)**

(72) Inventeurs:
• **PICART, Pascal 72000 Le Mans (FR)**
• **MALEK, Mokrane 72100 Le Mans (FR)**

(74) Mandataire: **Henriot, Marie-Pierre Marks & Clerk France Conseils en Propriété Industrielle Immeuble Visium 22, Avenue Aristide Briand 94117 Arcueil Cedex (FR)**

(56) Documents cités:
• **MICÃ V ET AL: "Superresolved phase-shifting Gabor holography by CCD shift", JOURNAL OF OPTICS. A, PURE AND APPLIED OPTICS, INSTITUTE OF PHYSICS PUBLISHING, BRISTOL, GB, vol. 11, no. 12, 1 décembre 2009 (2009-12-01), page 125408, XP020169699, ISSN: 1464-4258**
• **MICO V ET AL: "Phase-shifting Gabor holography", OPTICS LETTERS, OSA, OPTICAL SOCIETY OF AMERICA, WASHINGTON, DC, US, vol. 34, no. 10, 15 mai 2009 (2009-05-15), pages 1492-1494, XP001523909, ISSN: 0146-9592**
• **Joseph Rosen ET AL: "Fresnel incoherent correlation holography (FINCH): a review of research", Advanced Optical Technologies, vol. 1, no. 3, 1 July 2012 (2012-07-01), pages 151-169, XP55284206, DE ISSN: 2192-8576, DOI: 10.1515/aot-2012-0014**

**Description**

Le domaine de l'invention est celui de l'imagerie holographique numérique telle que la microscopie holographique, notamment appliquée à l'imagerie 3D de micro-objets.

Les méthodes existantes d'observation et de caractérisation de cellules vivantes tels que les microorganismes (bactéries, algues, levures,...) sont souvent invasives et conduisent à la destruction de l'échantillon observé ou à sa modification liée à la préparation de l'échantillon, par exemple lors de l'élimination de l'eau sous vide dans le cas de la microscopie électronique. Elles peuvent ainsi entraîner des artefacts et des problèmes d'interprétation.

Les techniques microscopiques conventionnelles à base de rayonnement optique ne fournissent pas d'information quantitative sur l'indice optique ou la permittivité des échantillons car elles ne sont que capables de détecter l'intensité diffractée par ces objets, et restreint de fait leur applicabilité dans de nombreux cas. Leur résolution est également limitée par la diffraction.

L'imagerie holographique numérique permet de fournir une cartographie tridimensionnelle absolue à la fois d'indice optique, de permittivité ou de forme d'une surface structurée (transparente ou non), avec une résolution sub-longueur d'onde dans le domaine du visible donc inférieure au micromètre. Un tel outil trouve de nombreuses applications en biologie et en nanotechnologie (fonctionnalisation de surfaces, films de polymère d'épaisseur nanométrique, nanotube de carbone, nanofils...), comme par exemple la tomographie 3D de microorganismes, l'étude de la structure interne de cellules non marquées ou encore le contrôle de l'élaboration de composants gravés typiquement de quelques centaines de nanomètres. Il permet d'étudier le vivant dans son environnement sans avoir à le perturber (biofilm bactérien en réseau d'eau potable, bactéries pathogènes dans le domaine agroalimentaire ou de la santé).

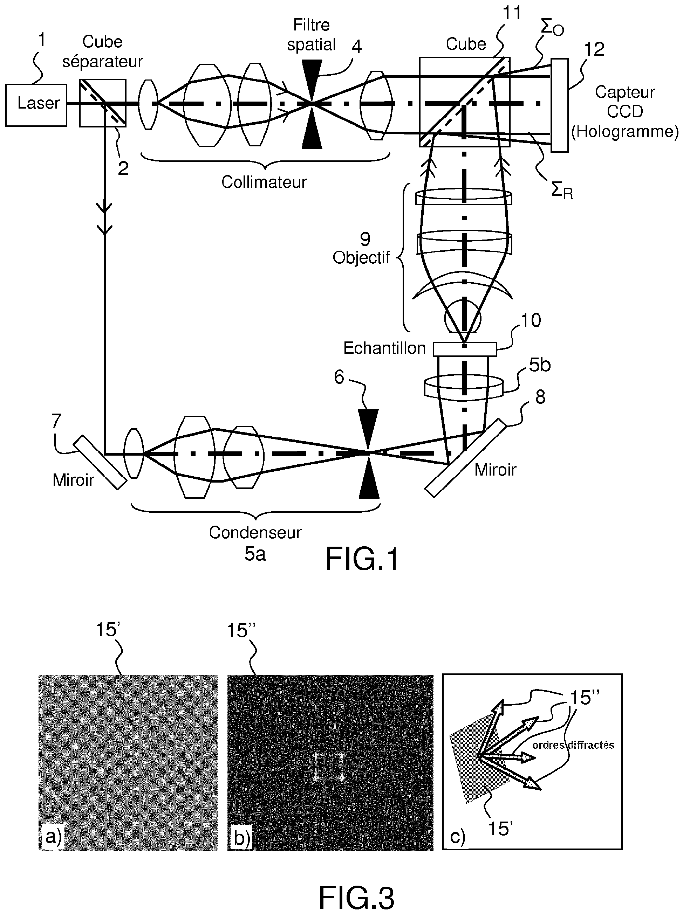

Un exemple de microscope holographique numérique basé sur le principe de l'holographie dite « hors-axe » (« off-axis ») est décrit en relation avec la figure 1. Il comprend une source 1 de lumière cohérente telle qu'un laser qui envoie un faisceau sur un premier cube séparateur 2. Une première partie du faisceau est mise en forme au moyen d'un collimateur 3 incluant un filtre spatial 4, pour former une onde de référence $\Sigma_R$ légèrement inclinée par rapport à l'axe optique (d'où le caractère « hors axe ») et qui est captée à travers un deuxième cube séparateur 11 par un capteur numérique 12 tel qu'une caméra CCD ou CMOS. L'autre partie du faisceau, issue du premier cube séparateur est mise en forme au moyen d'un autre collimateur 5a-5b incluant un autre filtre spatial 6, puis envoyée en transmission (comme montré sur cette figure) ou en réflexion sur un échantillon ou objet 10. L'onde diffractée par cet échantillon, est agrandie au moyen d'un objectif 9 qui, avec le deuxième cube séparateur 11, forme l'image de l'échantillon à proximité du capteur 12. L'onde diffractée et agrandie $\Sigma_O$ interfère avec l'onde de référence $\Sigma_R$, formant ainsi un hologramme sur le capteur 12. Ce microscope enregistre un hologramme numérique de l'onde diffractée par l'objet.

Outre le fait qu'une telle configuration d'enregistrement est encombrante, elle est de plus sensible aux perturbations extérieures qui modifient les chemins optiques entre l'onde de référence et l'onde diffractée par l'objet et détériorent l'hologramme, brouillant alors l'observation de l'objet lors de sa reconstruction. Ceci est accentué lors de l'observation de phénomènes dynamiques.

Dans la mesure où l'hologramme a été obtenu avec succès, l'amplitude et la phase de l'objet sont reconstruites numériquement de manière connue comme décrit par exemple dans la publication de CUCHE E., MARQUET P., DEPEURSINGE C., « Simultaneous amplitude-contrast and quantitative phase-contrast microscopy by numerical reconstruction of Fresnel off-axis holograms », Applied Optics, Vol. 38, p.6994-7001, 1999 :

- en calculant le spectre de l'hologramme, en appliquant par exemple une Transformée de Fourier Discrète (TFD)
- en filtrant numériquement le lobe du spectre représentatif de l'amplitude et de la phase de l'objet,
- en calculant la TFD inverse du lobe filtré pour ainsi obtenir une image d'amplitude et une image de phase de l'objet.

Une étape de mise au point numérique est avantageusement appliquée aux images obtenues.

Le calcul de l'amplitude complexe du front d'onde de l'objet (aussi désignée amplitude complexe de l'onde de l'objet) dans le plan du capteur, noté $A=a.\exp(i\varphi)$ peut être explicité par les deux équations (1) et (2) :

$$a = \left| TFD^{-1}\left\{ f\left[ TFD\{H\} \right] \right\} \right| \tag{1}$$

$$\varphi = \arg\left( TFD^{-1}\left\{ f\left[ TFD\{H\} \right] \right\} \right) \tag{2}$$

où $H$ est l'hologramme enregistré, a et $\varphi$ sont respectivement le module et la phase de l'amplitude complexe, et $f$[...] représente le processus de filtrage numérique du lobe du spectre fréquentiel spatial représentatif de l'amplitude et de la phase de l'objet. *TFD*{...} et *TFD*$^{-1}${...} sont respectivement les opérateurs Transformée de Fourier Discrète directe et inverse et arg(...) est l'argument du complexe (c'est-à-dire sa phase). Ces équations ne tiennent pas compte de termes correctifs qui pourraient éventuellement être appliqués au calcul.

Il existe une autre technique d'holographie numérique, moins courante que la précédente, dite holographie « dans l'axe » (« in-line »), qui utilise un faisceau de référence orienté dans la même direction que le faisceau objet. Avec cette technique, l'amplitude de l'objet uniquement est accessible. En effet, la superposition des faisceaux objet $\Sigma_O$ et référence $\Sigma_R$ limite la mesure de phase à partir des hologrammes enregistrés. L'avantage de cette technique dans certaines applications (étude d'objets opaques par exemple) est la simplicité de sa mise en oeuvre car elle ne nécessite pas un réglage fin du faisceau de référence. Il est également possible de contourner la superposition des ordres de diffraction due au caractère « in-line » en utilisant une modulation de l'onde de référence (méthode dite du « décalage de phase »). Cependant, cette approche nécessite des enregistrements séquentiels d'au moins trois hologrammes déphasés (4 en général), ce qui limite la méthode pour l'étude des phénomènes dynamiques comme décrit dans la publication de YAMAGUCHI I., KATO J., OHTA S., MIZUNO J., « Image formation in phase shifting digital holography and application to microscopy », Applied Optics, Vol. 40, p.6177-6186, 2001.

Un autre système d'enregistrement d'un hologramme avec deux ondes dont l'une est une onde de référence est décrit dans la publication Fresnel incoherent correlation holography (FINCH) : a review of research » de J. Rosen and G. Brooker (Adv. Opt. Tech. Vol 1 pp 151-169).

Il demeure à ce jour un besoin pour un système donnant simultanément satisfaction en termes d'encombrement, de sensibilité aux perturbations extérieures et d'application à l'étude de phénomènes dynamiques.

L'invention a pour objet un système d'enregistrement holographique numérique auto référencé et son procédé de reconstruction correspondant.

Dans le système proposé, le codage de l'amplitude et de la phase est rendu possible grâce à l'utilisation d'un élément diffractif, le Modulateur Spatial de Lumière ou « SLM » acronyme de l'expression anglo-saxonne « Spatial Light Modulator ». Celui-ci est programmé (ou gravé sur un support photosensible) pour générer un réseau périodique (à une ou plusieurs périodes par exemple) permettant de produire des répliques identiques du champ diffracté par l'objet éclairé par la source de lumière. Ces répliques sont redirigées vers le capteur, positionné d'une manière spécifique, pour générer un hologramme permettant d'extraire, par calcul numérique, la phase et l'amplitude des objets étudiés.

Plus précisément il s'agit d'un système d'enregistrement d'un hologramme numérique d'un objet qui comprend :

- une source cohérente ou partiellement cohérente destinée à éclairer l'objet et ainsi produire une onde diffractée par l'objet,
- un capteur numérique destiné à enregistrer l'hologramme numérique de l'objet.

Il est principalement caractérisé en ce qu'il comprend en outre un ensemble de modulation spatiale de phase constitué :

- d'un modulateur spatial de phase situé entre l'objet et le capteur, associé à
- un premier dispositif de formation d'image adapté pour former l'image A" de l'objet à une distance $\Delta z1$ non nulle du modulateur spatial de phase et
- à un deuxième dispositif de formation d'image adapté pour former :

  ◦ l'image du plan du modulateur spatial de phase, dans un plan situé à une distance $\Delta z2$ non nulle du plan du capteur,
  ◦ et l'image A' de l'image A" de l'objet, dans un plan situé à une distance $\Delta z'$ du plan du capteur,

  cet ensemble de modulation étant adapté pour produire dans le plan du capteur plusieurs répliques identiques de l'onde diffractée par l'objet, décalées entre elles mais se recouvrant partiellement, ces répliques formant sur le capteur un hologramme numérique de l'objet, dit hologramme auto-référencé.

On obtient ainsi un hologramme numérique d'une ou plusieurs dérivées spatiales de l'onde diffractée par l'objet.

L'avantage de ce système d'enregistrement réside dans le fait que l'enregistrement de l'hologramme numérique s'affranchit totalement de l'utilisation d'un faisceau de référence dans le montage optique car l'hologramme est auto-référencé c'est-à-dire que l'onde objet produit elle-même sa propre référence. L'onde issue de l'objet est répliquée latéralement plusieurs fois pour produire des interférences dans le plan du capteur (et donc répliquée simultanément), sans nécessiter au préalable de mélanger cette onde issue de l'objet avec une onde de référence.

Alors qu'un faisceau de référence est nécessaire dans le cas des systèmes d'interférométrie holographique classique. En effet, ces derniers nécessitent l'utilisation d'un faisceau de référence afin d'enregistrer sur un capteur l'information portant à la fois l'amplitude et la phase des objets étudiés. Malgré la robustesse de ces systèmes, il est souvent délicat de régler le faisceau de référence afin d'extraire correctement les informations de phase et d'amplitude, comme souligné en préambule.

De plus le système selon l'invention a pour avantage de ne plus être sensible aux perturbations extérieures car les chemins optiques de l'onde objet et de l'onde de référence sont conjoints et identiques.

Selon une caractéristique de l'invention, le modulateur spatial de phase est un réseau périodique par exemple à une ou deux périodes.

La source peut être cohérente ou partiellement cohérente, spatialement et/ou temporellement.

Selon une autre caractéristique de l'invention, la source cohérente ou partiellement cohérence est multi-longueur d'onde. L'objet étant destiné à être éclairé selon une direction prédéterminée, la source multi-longueur d'onde est de préférence utilisée avec une direction d'éclairage différente pour chaque longueur d'onde.

L'objet est destiné à être éclairé en transmission ou en réflexion.

Eventuellement, le système d'enregistrement comporte des moyens pour modifier la direction d'éclairage de l'objet et ainsi enregistrer pour différentes directions d'éclairage, un hologramme par direction d'éclairage et/ou des moyens pour engendrer une rotation de l'objet autour d'un axe donné et ainsi enregistrer pour différents angles de rotation, un hologramme par angle de rotation.

Le premier dispositif de formation d'image comporte typiquement un cube séparateur, éventuellement associé à une lentille et/ou un objectif de microscope.

Le deuxième dispositif de formation d'image comporte généralement le même cube séparateur, éventuellement associé à un afocal.

L'invention a aussi pour objet un procédé de reconstruction numérique de l'image d'un objet à partir d'un hologramme de l'objet obtenu par un système d'enregistrement tel que décrit, qui comprend des étapes de :

- calcul par TFD (Transformée de Fourier Discrète), du spectre fréquentiel spatial de l'hologramme comportant un lobe spectral principal et des lobes spectraux secondaires,
- filtrage numérique de plusieurs lobes spectraux,
caractérisé en ce qu'au moins deux lobes sont filtrés,

  - le lobe principal,
  - au moins un lobe secondaire,

et en ce qu'il comprend des étapes de :

- à partir du lobe principal filtré, calcul, dans le plan du capteur, du module de l'amplitude complexe de l'onde diffractée par l'objet lors de l'enregistrement,
- pour chaque lobe secondaire filtré, calcul par TFD inverse, dans le plan du capteur, de la dérivée spatiale de la phase optique de l'onde diffractée par l'objet suivant une direction déterminée en fonction de la modulation de phase du modulateur lors de l'enregistrement,
- intégration de ces dérivées spatiales pour obtenir la phase optique de l'onde diffractée par l'objet dans le plan du capteur,
- combinaison du module de l'amplitude complexe et de la phase optique pour obtenir l'onde complexe diffractée par l'objet dans le plan du capteur.

Eventuellement, il comprend en outre une étape de mise au point numérique de l'image de l'objet, à partir du champ complexe diffracté par l'objet dans le plan du capteur.

L'invention concerne aussi un produit programme d'ordinateur, ledit programme d'ordinateur comprenant des instructions de code permettant d'effectuer les étapes du procédé de reconstruction tel que décrit, lorsque ledit programme est exécuté sur un ordinateur.

L'invention a également pour objet un système de reconstruction numérique de l'image d'un objet à partir d'un hologramme obtenu par un système d'enregistrement tel que décrit, qui comporte des moyens de mise en oeuvre du procédé de reconstruction tel que décrit.

Les moyens de mise en oeuvre sont par exemple un ordinateur équipé du produit programme d'ordinateur indiqué.

L'invention concerne enfin un système d'imagerie holographique qui comprend un système d'enregistrement et un système de reconstruction tels que décrits.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement un exemple de microscope holographique de l'état de l'art,

les figures 2 représentent schématiquement un exemple de système d'enregistrement holographique auto-référencé selon l'invention dans le cas d'une configuration en transmission (fig 2a) et en réflexion (fig 2b),

les figures 3 illustrent un exemple de réseau de diffraction programmé sur le SLM sous la forme d'un réseau bi-périodique de phase (fig 3a), son spectre de fréquences spatiales (fig 3b), et les ordres diffractés par ce réseau (fig 3c),

les figures 4 illustrent deux modes d'éclairage tri-chromatique plan (fig 4a) ou sphérique (fig 4b) d'un objet,

les figures 5 illustrent un exemple d'hologramme autoréférencé enregistré par un système d'enregistrement selon l'invention (fig 5a), son spectre de fréquences spatiales (fig 5b), et les axes des repères sur lesquels sont calculées les dérivées de la phase optique (fig 5c),

les figures 6 représentent schématiquement un exemple de système d'enregistrement holographique auto-référencé en transmission (fig 6a) ou en réflexion (fig 6b), équipé de moyens de balayage pour obtenir un système d'enregistrement tomographique selon l'invention,

les figures 7 sont des exemples d'images reconstruites, floue (fig 7a) ou mise au point numériquement (fig 7b).

D'une figure à l'autre, les mêmes éléments sont repérés par les mêmes références.

De manière classique, un système d'imagerie holographique d'un objet comprend un système d'enregistrement d'un hologramme de l'objet et un système de reconstruction de l'objet à partir de l'hologramme enregistré. Chacun de ces systèmes est décrit séparément ci-après.

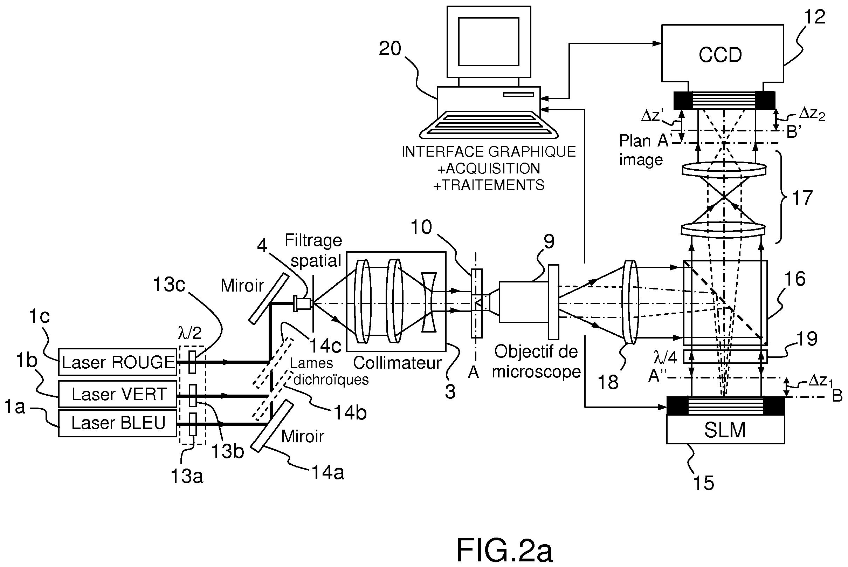

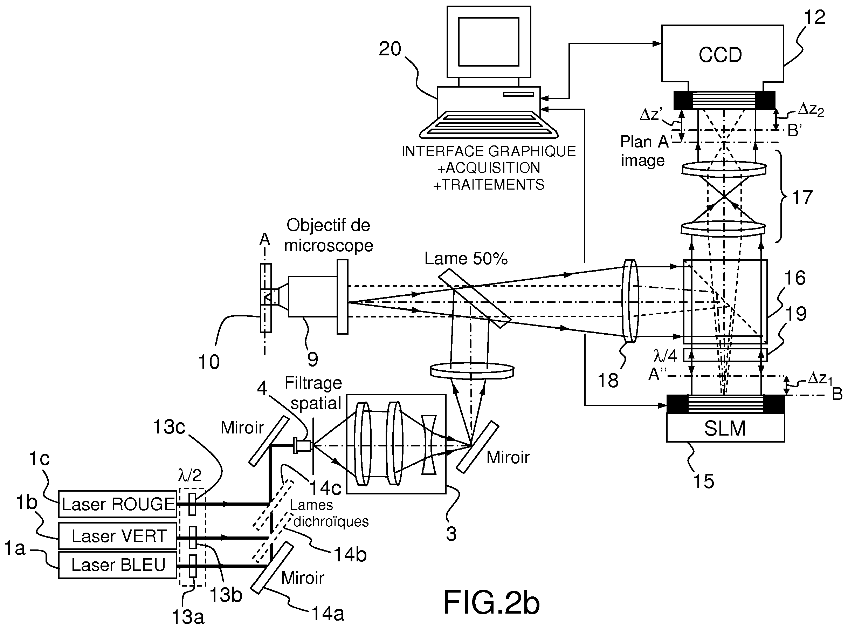

La figure 2a illustre un exemple de configuration en transmission d'un système d'enregistrement par microscopie holographique auto référencée, selon l'invention. Un faisceau cohérent ou partiellement cohérent issu d'une source 1 laser voire d'une diode électroluminescente, traverse un collimateur 3 et éclaire l'objet A 10. Un premier dispositif optique d'imagerie, en l'occurrence un objectif de microscope 9 associé à une lentille 18 et à un cube séparateur de polarisation 16, forme sur un Modulateur Spatial de Lumière 15 (ou « SLM » acronyme de l'expression anglo-saxonne Spatial Light Modulator) ou à proximité, l'image A" de l'objet A. On note par $\Delta z1$ la distance entre l'image A" et le Modulateur Spatial de Lumière 15. Si $\Delta z1{\neq}0$, la propagation du champ A" à la distance $\Delta z1$ où se situe le SLM 15, produit une image floue ou plus précisément la figure de diffraction de l'image A" dans le plan du SLM, qui ne peut donc pas être dans le plan de Fourier de l'image de l'objet comme on peut le voir sur les figures 2.

Un deuxième dispositif optique d'imagerie, en l'occurrence le même cube séparateur de polarisation 16 associé à un afocal 17, forme du plan image A" une image A' sur le plan du capteur 12 ou à proximité (en amont ou en aval) à une distance $\Delta z'$. Comme on le verra plus loin, le même deuxième dispositif optique d'imagerie forme du plan B du SLM 15 une image B' à la distance $\Delta z2$ du capteur 12.

Si $\Delta z'{\neq}0$, la propagation du champ A' à la distance $\Delta z'$ où se situe le capteur 12, produit une image floue ou plus précisément la figure de diffraction de l'image A' sur le plan capteur, le flou pouvant être compensé lors de la reconstruction numérique par une étape de mise au point comme on le verra plus loin.

Le SLM 15 peut être utilisé en réflexion comme dans l'exemple de la figure ou en transmission.

Un réseau de phase 15' de préférence multi périodique, programmé sur le SLM, permet de réfléchir A" (ou la figure de diffraction de A" dans le plan du SLM si $\Delta z1{\neq}0$) dans plusieurs directions. Ce réseau de phase peut aussi être obtenu en utilisant un élément optique diffractif (ou « DOE » acronyme de l'expression anglo-saxonne «Diffractive Optical Element ») tel qu'un élément holographique diffractif, codé dans une gélatine photosensible argentique, illuminée pour générer un réseau périodique permettant de produire dans plusieurs directions, des répliques identiques du champ diffracté par l'objet éclairé par la source de lumière.

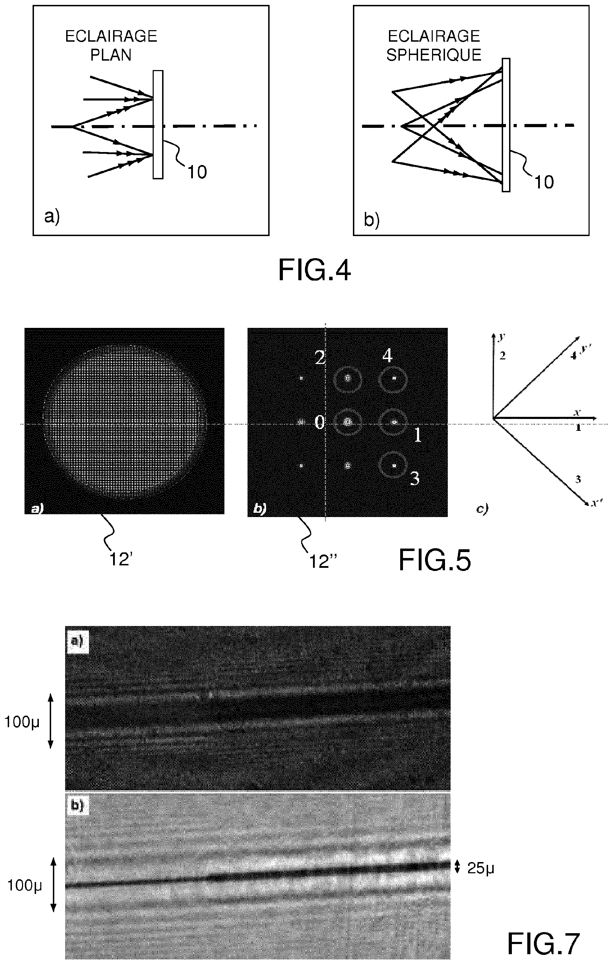

Les directions sont orientées de manière symétrique lorsque le réseau est multi périodique. Dans la suite, on prend comme exemple, un réseau de phase pure multi périodique dont un exemple de motif bidirectionnel est représenté sur la figure 3a, et qui est donc apte à former des répliques de A" (ou de sa figure de diffraction) dans quatre directions différentes comme montré figure 3c. La disposition des fréquences spatiales de ce réseau 15', quatre dans notre exemple, est illustrée par son spectre de fréquences spatiales 15" représenté sur la figure 3b. Le spectre de fréquences spatiales 12" de l'hologramme auto-référencé, enregistré avec ce réseau 15', est représenté sur la figure 5b.

On pourrait également prendre un réseau non périodique qui alors orienterait le champ optique réfléchi par le modulateur dans des directions non symétriques.

Le capteur 12 est positionné de manière à ce que l'image B' du plan B, soit formée par le deuxième dispositif optique 16-17 en amont (comme montré sur la figure) ou en aval du plan du capteur, à la distance $\Delta z2$ de manière à ce que les répliques présentent sur le capteur un décalage non nul entre elles tout en se recouvrant partiellement pour ainsi former un hologramme auto-référencé. La distance $\Delta z2$ permet ainsi de former un hologramme auto-référencé entre les répliques dont les caractéristiques sont liées au décalage généré par la distance $\Delta z2$ et les variations de l'onde engendrées par l'objet 10. L'ajustement de cette distance $\Delta z2$ permet d'adapter les paramètres du procédé de reconstruction pour une meilleure estimation de la phase et de l'amplitude de l'objet 10.

Le plan correspondant à une distance $\Delta z2$ nulle correspond au plan de sensibilité nulle pour lequel il n'y a aucun décalage entre les répliques et par conséquent aucune information sur les variations de l'onde engendrées par l'objet 10 n'est portée.

Lorsque le SLM n'est pas rigoureusement plan (il est gravé par exemple), les distances Δz', Δz1 et Δz2 sont repérées en considérant comme plan du SLM, un plan moyen; cela n'a pas d'impact sur le résultat du moment que les répliques sur le capteur sont décalées tout en se recouvrant partiellement.

Dans notre exemple on obtient un hologramme auto-référencé 12' avec 4 répliques dont un exemple est montré figure 5a, et on choisit une distance Δz2 permettant d'obtenir un recouvrement ajustable entre ces répliques.

Le cube séparateur de polarisation 16 est utilisé pour optimiser, via une lame demi-onde (λ/2)☐ placée en aval de la source de lumière, la quantité de lumière incidente sur le modulateur. Une lame quart-onde (λ/4) 19 adapte avantageusement la polarisation de la lumière réfléchie (ou transmise) par le SLM pour une transmission optimale vers le capteur CCD.

Le capteur 12 et le SLM 15 sont de préférence pilotés ensemble par un ordinateur 20 de manière à synchroniser la modulation du SLM avec les enregistrements des hologrammes 12' par le capteur.

Une configuration en réflexion d'un exemple de microscope holographique auto-référencé est représentée sur la figure 2b. Son fonctionnement est similaire à celui de la figure 2a. La seule différence réside dans la manière avec laquelle l'objet est éclairé, en réflexion dans ce cas.

Plusieurs faisceaux laser 1a, 1b, 1c, trois par exemple sont avantageusement utilisés. En effet l'utilisation des trois couleurs Rouge, Vert, Bleu, permet de reconstruire une image couleur RGB (Red Green Blue) sans utiliser de lumière blanche. L'observation d'une image couleur permettant également d'avoir accès à la phase optique donc au relief est souvent primordiale en microscopie. Par ailleurs, la combinaison deux à deux des mesures de phase optique de l'onde de l'objet (par exemple R-G, R-B ou G-B) permet de lever les ambiguïtés liées aux sauts de phase à $2\pi$ et ainsi d'augmenter la dynamique de mesure de profil de l'objet, en particulier parce que la différence de phase optique obtenue par deux longueurs d'ondes différentes engendre une longueur d'onde synthétique de plus grande valeur, comme expliqué dans la publication de KUHN J., COLOMB T., MONTFORT F., CHARRIERE F., EMERY Y., CUCHE E., P., MARQUET, DEPEURSINGE C., « Real-time dual-wavelength digital holographie microscopy with a single hologram acquisition », Optics Express, Vol. 15, p.7231-7242, 2007. En cas d'ambigüité de phase, on peut donc enregistrer un hologramme auto-référencé par couleur ou plusieurs hologrammes auto référencés, chacun à partir de deux couleurs engendrant une couleur synthétique.

L'opportunité d'utiliser 3 longueurs d'ondes donne également la possibilité d'enrichir l'information de phase. Ainsi, l'éclairage simultané plan ou sphérique selon plusieurs directions comme illustré respectivement figures 4a et 4b (dans le cas d'un éclairage sphérique on considère que la direction est celle du rayon central), permet d'acquérir simultanément en un seul hologramme éventuellement, des informations spatiales-spectrales offrant une couverture plus large du spectre de fréquences spatiales de l'objet. De ce fait, il est possible d'augmenter les résolutions transversale et axiale d'un facteur 2 par rapport à un microscope holographique conventionnel avec une seule longueur d'onde, comme décrit dans la publication de CHOI W., FANG-YEN C., BADIZADEGAN K., OH S., LUE N., DASARI R., FELD M., « Tomographic phase microscopy », Nature Methods, Vol. 4, p.717, 2007.

Ces faisceaux lasers 1a, 1b, 1c sont combinés avec des lames dichroïques 14a, 14b, 14c adaptées aux sources lasers. Chaque source laser est alors associée à une lame demi-onde 13a ou 13b ou 13c, et une lame dichroïque située en aval de la lame demi-onde. La lame quart-d'onde 19 est choisie achromatique.

L'éclairage fourni par les sources de lumière peut également être choisi partiellement temporellement cohérent ou partiellement spatialement cohérent, ou les deux à la fois.

La reconstruction de l'image de l'objet est abordée ci après.

A partir de l'hologramme 12' enregistré sur un capteur numérique 12 comme indiqué précédemment, on calcule son spectre 12'' de fréquences spatiales. On utilise par exemple une Transformée de Fourier Discrète pour ce calcul. Un exemple de spectre 12'' de fréquences spatiales d'un hologramme auto-référencé enregistré sur un capteur CCD est illustré figure 5b.

A partir du spectre fréquentiel 12'', on procède au filtrage de la composante spatiale spectrale d'ordre 0 et des composantes spatiales spectrales d'ordres 1, 2, 3 et 4 (quatre dans cet exemple car utilisation d'un réseau bi-périodique).

La composante d'ordre 0 permet de calculer le module de l'amplitude complexe du champ diffracté par l'objet. Elle est extraite par filtrage dans le plan spectral, puis par calcul de la Transformée de Fourier Discrète inverse, et calcul du module du résultat obtenu.

Le calcul du module de l'amplitude complexe du front d'onde de l'objet dans le plan du capteur, notée $A=a.exp(i\varphi)$ peut être explicité par l'équation (3) :

$$a = \left| TFD^{-1}\left\{f_0\left[TFD\{H\}\right]\right\}\right| \tag{3}$$

où H est l'hologramme enregistré, a et $\varphi$ sont respectivement le module et la phase de l'amplitude complexe, et $f_0[...]$ représente le processus de filtrage numérique de la composante d'ordre 0 du spectre fréquentiel spatial de l'hologramme.

Les autres composantes spectrales (ordres 1, 2, 3 et 4) permettent de calculer les dérivées de la phase optique du champ complexe diffracté par l'objet dans le plan du capteur. Dans notre exemple, les quatre dérivées sont calculées dans deux repères cartésiens représentés par les systèmes d'axes (x,y) et (x',y') montrés sur la figure 5c. En calculant la TFD inverse de chaque lobe filtré, on obtient une image de la dérivée spatiale de la phase optique de l'onde diffractée par l'objet suivant une direction donnée x, y, x' ou y'.

Le calcul des dérivées de la phase optique du champ complexe, noté $A=a.\exp(i\varphi)$, diffracté par l'objet dans le plan du capteur peut être explicité par les équations (4-7) :

$$\frac{4\pi}{p_{slm}}\Delta z_2 \frac{\partial \varphi}{\partial x} = \arg\left(TFD^{-1}\{f_1[TFD\{H\}]\}\right) \qquad (4)$$

$$\frac{4\pi}{p_{slm}}\Delta z_2 \frac{\partial \varphi}{\partial y} = \arg\left(TFD^{-1}\{f_2[TFD\{H\}]\}\right) \qquad (5)$$

$$\frac{4\sqrt{2}\pi}{p_{slm}}\Delta z_2 \frac{\partial \varphi}{\partial x'} = \arg\left(TFD^{-1}\{f_3[TFD\{H\}]\}\right) \qquad (6)$$

$$\frac{4\sqrt{2}\pi}{p_{slm}}\Delta z_2 \frac{\partial \varphi}{\partial y'} = \arg\left(TFD^{-1}\{f_4[TFD\{H\}]\}\right) \qquad (7)$$

où $f_n[...]$, $n$ = 1,2,3,4, représente le processus de filtrage numérique de la composante d'ordre n du spectre de l'hologramme (figure 5b) et $p_{slm}$ est la période (sous forme d'une longueur selon l'axe envisagé) du réseau du modulateur de phase optique.

Ces équations ne tiennent pas compte de termes correctifs qui pourraient éventuellement être appliqués au calcul.

Ces dérivées spatiales sont intégrées pour obtenir la phase optique de l'onde diffractée par l'objet dans le plan du capteur. Pour ce calcul numérique d'intégration, on peut utiliser une des différentes méthodes proposées dans la littérature, notamment dans la publication de FRANKOT R.T., CHELLAPPA R., « A method for enforcing integrability in shape from shading algorithms », in Shape from Shading (eds.), B.K.P. Horn and M.J. Brooks, M.I.T. Press, p.89-122, 1989.

Le module de l'amplitude complexe et la phase optique du champ diffracté par l'objet sont alors combinés pour obtenir l'onde complexe diffractée par l'objet dans le plan du capteur.

Ce procédé de reconstruction peut être appliqué pour chaque longueur d'onde ayant donné enregistrement d'un hologramme auto-référencé, ou pour l'une ou l'autre de ces longueurs d'onde.

Ce procédé de reconstruction peut s'implémenter avec un système de reconstruction numérique de l'image d'un objet, à partir d'un hologramme obtenu par un système d'enregistrement tel que décrit, qui comporte des moyens de mise en oeuvre du procédé de reconstruction présenté ci-dessus.

Ce procédé de reconstruction peut notamment s'implémenter à partir d'un produit programme d'ordinateur, ce programme d'ordinateur comprenant des instructions de code permettant d'effectuer les étapes du procédé de reconstruction. Il est enregistré sur un support lisible par ordinateur, comme par exemple l'ordinateur 20 utilisé pour synchroniser enregistrement et modulation. Le support peut être électronique, magnétique, optique, électromagnétique ou être un support de diffusion de type infrarouge. De tels supports sont par exemple, des mémoires à semiconducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

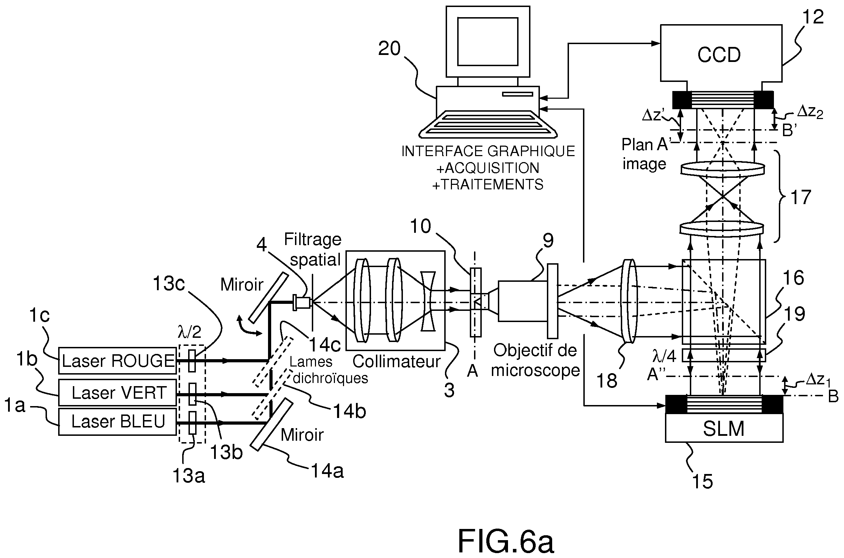

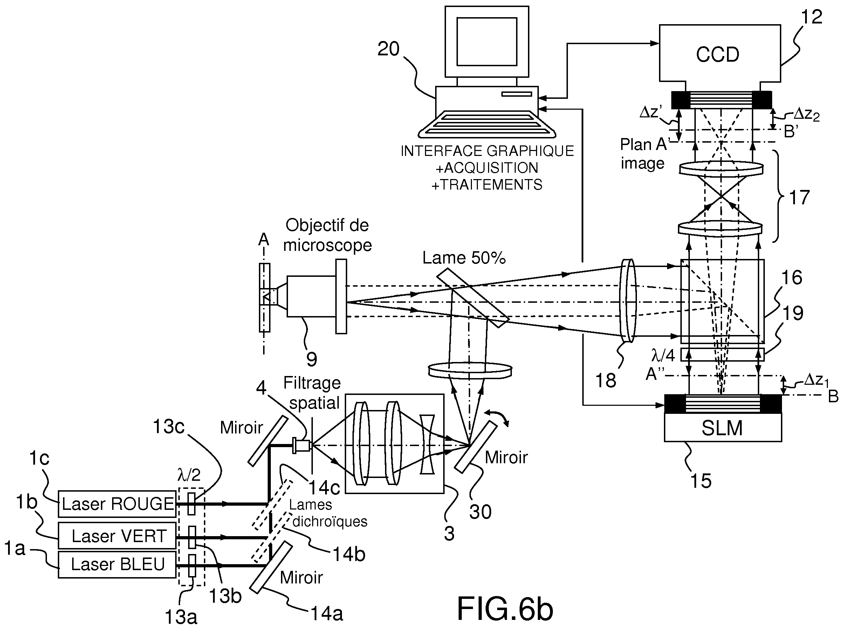

Le système holographique peut être complété pour obtenir un système de tomographie holographique auto-référencé. L'aspect tomographique est par exemple obtenu par balayage lors de l'enregistrement (figure 6a et 6b). Pour cela, un miroir rotatif 30, piloté par ordinateur 20 et synchronisé avec le capteur 12, est ajouté à l'architecture du système de la figure 2a, comme montré figure 6a ou ajouté à l'architecture du système de la figure 2b comme montré figure 6b. Il permet d'enregistrer des hologrammes sous différents angles de projection.

Selon une alternative, l'aspect tomographique est obtenu en utilisant des moyens pour engendrer une rotation de l'objet autour d'un axe donné et ainsi enregistrer pour différents angles de rotation, un hologramme par angle de rotation.

Une image est reconstruite pour chaque hologramme enregistré, c'est-à-dire pour chaque direction d'éclairage de l'objet. Les images reconstruites pour ces différentes directions sont ensuite combinées pour calculer la forme 3D des objets. La méthode de calcul utilisée est similaire à celle employée dans les techniques de tomographie diffractive.

Le système de tomographie peut également être obtenu par un système exerçant une rotation sur l'objet autour d'un axe donné.

Les domaines d'applications sont typiquement les suivants :

- Imagerie biologique : étude de spécimens biologiques comme les bactéries et micro-organismes (tomographie 3D).
- Physique des matériaux : caractérisation de matériaux et surfaces structurées.
- Micro technologies : contrôle de micro systèmes tels que micro accéléromètres, microphones sur silicium, matrices de micro miroirs, etc.

Un système d'imagerie holographique auto-référencé selon l'invention a été utilisé pour observer des objets non calibrés, tels qu'une fibre de verre de 100 $\mu$m de diamètre, dont la gaine a été épluchée (partie gauche de fig 7b). Le dispositif d'enregistrement holographique a été utilisé sans l'objectif de microscope et la lentille du premier dispositif de formation d'image. L'hologramme a été enregistré avec $\Delta z1$ et $\Delta z'$ non nulles ; l'image reconstruite à partir de l'amplitude et de la phase mesurées selon le procédé de reconstruction décrit, est donc floue (cf figure 7a). La mise au point sur cette image (cf figure 7b) a été réalisée numériquement en utilisant l'intégrale de Fresnel calculée avec la forme de convolution telle que décrite dans la publication de LI J.C., TANKAM P., PENG Z., PICART P., « Digital holographic reconstruction of large objects using a convolution approach and adjustable magnification », Optics Letters, Vol. 34, p.572-574, 2009.

Le système d'imagerie holographique auto-référencé a également été utilisé pour observer un motif de forme carrée gravé sur une plaque de verre. Dans cet exemple, la distance $\Delta z'$ est nulle. Dans ce cas, et pour cet objet, la mise au point numérique sur l'image de l'objet n'est pas nécessaire. L'image de l'objet est donnée par l'amplitude et la phase calculées.

**Revendications**

1.   Système d'enregistrement d'un hologramme numérique d'un objet (10) qui comprend :

    - une source cohérente ou partiellement cohérente (1) destinée à éclairer l'objet et ainsi produire une onde diffractée par l'objet,
    - un capteur numérique (12) destiné à enregistrer l'hologramme numérique de l'objet,

    **caractérisé en ce qu'**il comprend en outre un ensemble de modulation spatiale de phase constitué :

    - d'un modulateur spatial de phase (15) situé entre l'objet et le capteur, associé à
    - un premier dispositif de formation d'image (9, 18, 16) adapté pour former l'image A" de l'objet à une distance $\Delta z1$ non nulle du modulateur spatial de phase (15) et
    - à un deuxième dispositif de formation d'image (16, 17) adapté pour former :

        - l'image (B') du plan du modulateur spatial de phase dans un plan situé à une distance $\Delta z2$ non nulle du plan du capteur (12),
        - et l'image A' de l'image A" de l'objet, dans un plan situé à une distance $\Delta z'$ du plan du capteur (12),

    cet ensemble de modulation étant adapté pour produire dans le plan du capteur plusieurs répliques identiques de l'onde diffractée par l'objet, décalées entre elles mais se recouvrant partiellement, ces répliques formant sur le capteur (12) un hologramme numérique dit auto-référencé (12') de l'objet.

2.   Système d'enregistrement d'un hologramme numérique selon la revendication précédente, **caractérisé en ce que** le modulateur spatial de phase (15) est un réseau périodique.

3.   Système d'enregistrement d'un hologramme numérique selon l'une des revendications précédentes, **caractérisé en ce que** l'ensemble de modulation est adapté pour produire 4 répliques dans le plan du capteur.

4.   Système d'enregistrement d'un hologramme numérique selon l'une des revendications précédentes, **caractérisé en ce que** la source est partiellement cohérente spatialement et/ou temporellement.

5. Système d'enregistrement d'un hologramme numérique selon l'une des revendications précédentes, **caractérisé en ce que** la source cohérente ou partiellement cohérente est multi-longueur d'onde.

6. Système d'enregistrement d'un hologramme numérique selon la revendication précédente, **caractérisé en ce que** la source multi-longueur d'onde destinée à éclairer l'objet comporte plusieurs sources mono-longueur d'onde (1a, 1b, 1c) avec une direction d'éclairage de l'objet différente pour chaque longueur d'onde.

7. Système d'enregistrement d'un hologramme numérique selon l'une des revendications précédentes, **caractérisé en ce que** l'objet (10) est destiné à être éclairé en transmission ou en réflexion.

8. Système d'enregistrement d'un hologramme numérique selon l'une des revendications précédentes, **caractérisé en ce qu'**il comporte des moyens (30) pour modifier la direction d'éclairage de l'objet (10) et ainsi enregistrer pour différentes directions d'éclairage, un hologramme par direction d'éclairage.

9. Système d'enregistrement d'un hologramme numérique selon l'une des revendications précédentes, **caractérisé en ce qu'**il comporte des moyens pour engendrer une rotation de l'objet (10) autour d'un axe donné et ainsi enregistrer pour différents angles de rotation, un hologramme par angle de rotation.

10. Système d'enregistrement d'un hologramme numérique selon l'une des revendications précédentes, **caractérisé en ce que** le capteur (12) est une caméra CCD ou CMOS.

11. Système d'enregistrement d'un hologramme numérique selon l'une des revendications précédentes, **caractérisé en ce que** le premier dispositif de formation d'images comprend un cube séparateur (16).

12. Système d'enregistrement d'un hologramme numérique selon la revendication précédente, **caractérisé en ce que** le premier dispositif de formation d'images comporte en outre une lentille (18) et/ou un objectif de microscope (9).

13. Système d'enregistrement d'un hologramme numérique selon l'une des revendications 11 ou 12, **caractérisé en ce que** le deuxième dispositif de formation d'images comporte le même cube séparateur (16).

14. Procédé de reconstruction numérique de l'image d'un objet à partir d'un hologramme (12') de l'objet obtenu par un système d'enregistrement selon l'une des revendications précédentes, qui comprend des étapes de :

   - calcul par Transformée de Fourier Discrète ou TFD, du spectre fréquentiel spatial de l'hologramme comportant un lobe spectral principal et des lobes spectraux secondaires,
   - filtrage numérique de lobes spectraux,
   **caractérisé en ce qu'**au moins deux lobes sont filtrés,

      - le lobe principal,
      - au moins un lobe secondaire,

   et **en ce qu'**il comprend des étapes de :

      - à partir du lobe principal filtré, calcul, dans le plan du capteur, du module de l'amplitude complexe de l'onde diffractée par l'objet lors de l'enregistrement,
      - pour chaque lobe secondaire filtré, calcul par TFD inverse, dans le plan du capteur, de la dérivée spatiale de la phase optique de l'onde diffractée par l'objet suivant une direction déterminée en fonction de la modulation de phase du modulateur, lors de l'enregistrement,
      - intégration de ces dérivées spatiales pour obtenir la phase optique de l'onde diffractée par l'objet dans le plan du capteur,
      - combinaison du module de l'amplitude complexe et de la phase optique pour obtenir l'onde complexe diffractée par l'objet dans le plan du capteur.

15. Procédé de reconstruction numérique de l'image de l'objet selon la revendication précédente, **caractérisé en ce qu'**il comprend en outre une étape de mise au point numérique de l'image de l'objet.

16. Produit programme d'ordinateur, ledit programme d'ordinateur comprenant des instructions de code permettant d'effectuer les étapes du procédé de reconstruction selon l'une quelconque des revendications 14 à 15, lorsque ledit programme est exécuté sur un ordinateur.

17. Système de reconstruction numérique de l'image d'un objet à partir d'un hologramme obtenu par un système d'enregistrement selon l'une des revendications 1 à 13, qui comporte des moyens de mise en oeuvre du procédé de reconstruction selon l'une quelconque des revendications 14 à 15.

18. Système de reconstruction selon la revendication précédente, **caractérisé en ce que** les moyens de mise en oeuvre sont un ordinateur (20) équipé du produit programme d'ordinateur selon la revendication 16.

19. Système d'imagerie holographique qui comprend un système d'enregistrement selon l'une des revendications 1 à 13, et un système de reconstruction selon l'une des revendications 17 à 18.

**Patentansprüche**

1. Aufzeichnungssystem eines digitalen Hologramms eines Gegenstands (10), welches Folgendes umfasst:

   - eine kohärente oder teilweise kohärente Quelle (1), um den Gegenstand zu beleuchten und dadurch eine durch den Gegenstand gebeugte Welle zu erzeugen,
   - einen digitalen Sensor (12), um das digitale Hologramm des Gegenstands aufzuzeichnen,

   **dadurch gekennzeichnet, dass** es ferner eine räumliche Phasenmodulationsanordnung umfasst, bestehend aus:

   - einem räumlichen Phasenmodulator (15) zwischen dem Gegenstand und dem Sensor, verbunden mit
   - einer ersten Bilderzeugungsvorrichtung (9, 18, 16), die angepasst ist, um das Bild A" des Gegenstands in einem Abstand $\Delta z1$ ungleich Null von dem räumlichen Phasenmodulator (15) zu erzeugen und
   - einer zweiten Bilderzeugungsvorrichtung (16, 17), die angepasst ist, um Folgendes zu erzeugen:

      - das Bild (B') der Ebene des räumlichen Phasenmodulators in einer Ebene, die sich in einem Abstand $\Delta z2$ ungleich Null von der Ebene des Sensors (12) befindet,
      - und das Bild A' des Bildes A" des Gegenstands in einer Ebene, die sich in einem Abstand $\Delta z'$ von der Ebene des Sensors (12) befindet,

   wobei diese Modulationsanordnung angepasst ist, um in der Ebene des Sensors mehrere identische Kopien der durch den Gegenstand gebeugten Welle zu erzeugen, die voneinander versetzt, aber teilweise überlappend sind, wobei diese Kopien auf dem Sensor (12) ein selbstreferenziertes (12') digitales Hologramm des Gegenstands bilden.

2. Aufzeichnungssystem eines digitalen Hologramms nach dem vorhergehenden Anspruch, **dadurch gekennzeichnet, dass** der räumliche Phasenmodulator (15) ein periodisches Netz ist.

3. Aufzeichnungssystem eines digitalen Hologramms nach einem der vorhergehenden Ansprüche, **dadurch gekennzeichnet, dass** die Modulationsanordnung angepasst ist, um 4 Kopien in der Ebene des Sensors zu erzeugen.

4. Aufzeichnungssystem eines digitalen Hologramms nach einem der vorhergehenden Ansprüche, **dadurch gekennzeichnet, dass** die Quelle räumlich und/oder zeitlich teilweise kohärent ist.

5. Aufzeichnungssystem eines digitalen Hologramms nach einem der vorhergehenden Ansprüche, **dadurch gekennzeichnet, dass** die kohärente oder teilweise kohärente Quelle eine Multiwellenlänge ist.

6. Aufzeichnungssystem eines digitalen Hologramms nach dem vorhergehenden Anspruch, **dadurch gekennzeichnet, dass** die Quelle der Multiwellenlänge zum Beleuchten des Gegenstands mehrere Quellen mit Monowellenlänge (1a, 1b, 1c) mit einer Beleuchtungsrichtung des Gegenstands, die sich für jede Wellenlänge unterscheidet, aufweist.

7. Aufzeichnungssystem eines digitalen Hologramms nach einem der vorhergehenden Ansprüche, **dadurch gekennzeichnet, dass** der Gegenstand (10) dazu dient, durch Übertragung oder Reflexion beleuchtet zu werden.

8. Aufzeichnungssystem eines digitalen Hologramms nach einem der vorhergehenden Ansprüche, **dadurch gekenn-**

**zeichnet, dass** es Mittel (30) aufweist, um die Beleuchtungsrichtung des Gegenstands (10) zu modifizieren und dadurch für verschiedene Beleuchtungsrichtungen ein Hologramm je Beleuchtungsrichtung aufzuzeichnen.

9. Aufzeichnungssystem eines digitalen Hologramms nach einem der vorhergehenden Ansprüche, **dadurch gekennzeichnet, dass** es Mittel aufweist, um eine Drehung des Gegenstands (10) um eine gegebene Achse zu bewirken und dadurch für verschiedene Drehwinkel ein Hologramm je Drehwinkel aufzuzeichnen.

10. Aufzeichnungssystem eines digitalen Hologramms nach einem der vorhergehenden Ansprüche, **dadurch gekennzeichnet, dass** der Sensor (12) eine CCD- oder CMOS-Kamera ist.

11. Aufzeichnungssystem eines digitalen Hologramms nach einem der vorhergehenden Ansprüche, **dadurch gekennzeichnet, dass** die erste Bilderzeugungsvorrichtung einen Teilerwürfel (16) umfasst.

12. Aufzeichnungssystem eines digitalen Hologramms nach dem vorhergehenden Anspruch, **dadurch gekennzeichnet, dass** die erste Bilderzeugungsvorrichtung ferner eine Linse (18) und/oder ein Mikroskopobjektiv (9) aufweist.

13. Aufzeichnungssystem eines digitalen Hologramms nach einem der Ansprüche 11 oder 12, **dadurch gekennzeichnet, dass** die zweite Bilderzeugungsvorrichtung den gleichen Teilerwürfel (16) aufweist.

14. Verfahren zur digitalen Rekonstruktion des Bildes eines Gegenstands anhand eines Hologramms (12') des Gegenstands, das von einem Aufzeichnungssystem nach einem der vorhergehenden Ansprüche erhalten wurde, die folgenden Schritte umfassend:

   - Berechnen, durch diskrete Fourier-Transformation oder DFT, des räumlichen Frequenzspektrums des Hologramms, das eine primäre spektrale Keule und sekundäre spektrale Keulen enthält,
   - digitales Filtern der spektralen Keulen,

   **dadurch gekennzeichnet, dass** mindestens zwei Keulen gefiltert werden,

   - die primäre Keule,
   - mindestens eine sekundäre Keule,

   und dadurch, dass es die folgenden Schritte umfasst:

   - ausgehend von der gefilterten primären Keule erfolgendes Berechnen, in der Ebene des Sensors, des Moduls der komplexen Amplitude der durch den Gegenstand gebeugten Welle während der Aufzeichnung,
   - für jede sekundäre gefilterte Keule erfolgendes Berechnen, durch Invers-DFT, in der Ebene des Sensors, der räumlichen Ableitung der optischen Phase der durch den Gegenstand gebeugten Welle gemäß einer von der Phasenmodulation des Modulators während der Aufzeichnung bestimmten Richtung,
   - Integrieren dieser räumlichen Ableitungen, um die optische Phase der durch den Gegenstand gebeugten Welle in der Ebene des Sensors zu erhalten,
   - Kombinieren des Moduls der komplexen Amplitude und der optischen Phase, um die durch den Gegenstand gebeugte komplexe Welle in der Ebene des Sensors zu erhalten.

15. Verfahren zur digitalen Rekonstruktion des Bildes des Gegenstands nach dem vorhergehenden Anspruch, **dadurch gekennzeichnet, dass** es ferner einen Schritt der digitalen Fokussierung des Bildes des Gegenstands umfasst.

16. Computerprogrammprodukt, wobei das Computerprogramm Code-Anweisungen umfasst, die es ermöglichen, die Schritte des Verfahrens nach einem der Ansprüche 14 bis 15 durchzuführen, wobei das Programm auf einem Computer ausgeführt wird.

17. System zur digitalen Rekonstruktion des Bildes eines Gegenstands anhand eines Hologramms, das von einem Aufzeichnungssystem nach einem der Ansprüche 1 bis 13 erhalten wurde, welches Mittel zum Ausführen des Verfahrens zur Rekonstruktion nach einem der Ansprüche 14 bis 15 umfasst.

18. System zur Rekonstruktion nach dem vorhergehenden Anspruch, **dadurch gekennzeichnet, dass** die Mittel zum Ausführen ein Computer (20) sind, der mit dem Computerprogrammprodukt nach Anspruch 16 ausgestattet ist.

**19.** System zur holographischen Abbildung, umfassend ein Aufzeichnungssystem nach einem der Ansprüche 1 bis 13 und ein System zur Rekonstruktion nach einem der Ansprüche 17 bis 18.

**Claims**

**1.** A system for recording a digital hologram of an object (10) comprising:

- a coherent or partially coherent source (1) intended to illuminate the object and thus produce a wave that is diffracted by the object;
- a digital sensor (12) intended to record the digital hologram of the object,

**characterised in that** it further comprises a spatial phase modulation assembly consisting of:

- a spatial phase modulator (15) located between the object and the sensor that is associated with:
- a first image formation device (9, 18, 16) adapted to form the image A" of the object at a non-zero distance $\Delta z1$ from the spatial phase modulator (15) and with
- a second image formation device (16, 17) adapted to form:

- the image (B') of the plane of the spatial phase modulator in a plane located at a non-zero distance $\Delta z2$ from the plane of the sensor (12); and
- the image A' of the image A" of the object in a plane located at a distance $\Delta z'$ from the plane of the sensor (12),

said modulation assembly being adapted to produce, in the plane of the sensor, a plurality of identical duplicates of the wave diffracted by the object that are offset from each other but partially overlap, said duplicates forming a digital hologram of the object on the sensor (12), said hologram being called auto-referenced hologram (12').

**2.** The system for recording a digital hologram according to the preceding claim, **characterised in that** the spatial phase modulator (15) is a periodic grating.

**3.** The system for recording a digital hologram according to any one of the preceding claims, **characterised in that** the modulation assembly is adapted to produce 4 duplicates in the plane of the sensor.

**4.** The system for recording a digital hologram according to any one of the preceding claims, **characterised in that** the source is partially spatially and/or temporally coherent.

**5.** The system for recording a digital hologram according to any one of the preceding claims, **characterised in that** the coherent or partially coherent source is a multi-wavelength source.

**6.** The system for recording a digital hologram according to the preceding claim, **characterised in that** the multi-wavelength source intended to illuminate the object comprises a plurality of mono-wavelength sources (1a, 1b, 1c) with a different illumination direction of the object for each wavelength.

**7.** The system for recording a digital hologram according to any one of the preceding claims, **characterised in that** the object (10) is intended to be illuminated in transmission or in reflection.

**8.** The system for recording a digital hologram according to any one of the preceding claims, **characterised in that** it comprises means (30) for modifying the illumination direction of the object (10) and thus recording, for different illumination directions, one hologram per illumination direction.

**9.** The system for recording a digital hologram according to any one of the preceding claims, **characterised in that** it comprises means for generating a rotation of the object (10) about a given axis and thus recording, for different angles of rotation, one hologram per angle of rotation.

**10.** The system for recording a digital hologram according to any one of the preceding claims, **characterised in that** the sensor (12) is a CCD or CMOS camera.

11. The system for recording a digital hologram according to any one of the preceding claims, **characterised in that** the first image formation device comprises a cube beam splitter (16).

12. The system for recording a digital hologram according to the preceding claim, **characterised in that** the first image formation device further comprises a lens (18) and/or a microscope objective (9).

13. The system for recording a digital hologram according to any one of claims 11 or 12, **characterised in that** the second image formation device comprises the same cube beam splitter (16).

14. A method for digitally reconstructing the image of an object from a hologram (12') of the object that is obtained by a recording system according to any one of the preceding claims, which method comprises the following steps:

- computing, by Discrete Fourier Transform or DFT, the spatial frequency spectrum of the hologram comprising a main spectral lobe and secondary spectral lobes;
- digitally filtering the spectral lobes,

**characterised in that** at least two lobes are filtered:

- the main lobe;
- at least one secondary lobe,

and **in that** it comprises the following steps:

- from the filtered main lobe, computing in the plane of the sensor, the modulus of the complex amplitude of the wave diffracted by the object during recording;
- for each filtered secondary lobe, computing by inverse DFT in the plane of the sensor, the spatial derivative of the optical phase of the wave diffracted by the object in a direction that is determined as a function of the phase modulation of the modulator during recording;
- integrating these spatial derivatives to obtain, in the plane of the sensor, the optical phase of the wave diffracted by the object;
- combining the modulus of the complex amplitude and the optical phase to obtain, in the plane of the sensor, the complex wave diffracted by the object.

15. The method for digitally reconstructing the image of the object according to the preceding claim, **characterised in that** it further comprises a step of digitally focussing the image of the object.

16. A computer program product, said computer program comprising code instructions allowing the steps of the reconstruction method according to any one of claims 14 to 15 to be performed when said program is executed on a computer.

17. A system for digitally reconstructing the image of an object from a hologram obtained by a recording system according to any one of claims 1 to 13, which comprises means for implementing the reconstruction method according to any one of claims 14 to 15.

18. The reconstruction system according to the preceding claim, **characterised in that** the implementation means are a computer (20) equipped with the computer program product according to claim 16.

19. A holographic imaging system comprising a recording system according to any one of claims 1 to 13 and a reconstruction system according to any one of claims 17 to 18.

FIG.1

FIG.3

FIG.2a

FIG.2b

EP 2 915 009 B1

FIG.4

12'    12"    FIG.5

FIG.7

12
$\Delta z_2$
B'
17
16
19
$\Delta z_1$
B
CCD
$\Delta z'$
Plan A' image
SLM
15
$\lambda/4$
A''
18
9
Objectif de microscope
20
INTERFACE GRAPHIQUE +ACQUISITION +TRAITEMENTS
10
A
3
Collimateur
Filtrage spatial
4
Miroir
14c
Lames dichroïques
14b
14a
Miroir
13c
$\lambda/2$
13b
13a
Laser ROUGE
Laser VERT
Laser BLEU
1c
1b
1a

**FIG.6a**

FIG.6b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CUCHE E. ; MARQUET P. ; DEPEURSINGE C.** Simultaneous amplitude-contrast and quantitative phase-contrast microscopy by numerical reconstruction of Fresnel off-axis holograms. *Applied Optics,* 1999, vol. 38, 6994-7001
- **YAMAGUCHI I. ; KATO J. ; OHTA S. ; MIZUNO J.** Image formation in phase shifting digital holography and application to microscopy. *Applied Optics,* 2001, vol. 40, 6177-6186
- **J. ROSEN ; G. BROOKER.** *Adv. Opt. Tech.,* vol. 1, 151-169
- **KUHN J. ; COLOMB T. ; MONTFORT F. ; CHARRIERE F. ; EMERY Y. ; CUCHE E. ; P., MARQUET ; DEPEURSINGE C.** Real-time dual-wavelength digital holographie microscopy with a single hologram acquisition. *Optics Express,* 2007, vol. 15, 7231-7242
- **CHOI W. ; FANG-YEN C. ; BADIZADEGAN K. ; OH S. ; LUE N. ; DASARI R. ; FELD M.** Tomographic phase microscopy. *Nature Methods,* 2007, vol. 4, 717
- A method for enforcing integrability in shape from shading algorithms. **FRANKOT R.T. ; CHELLAPPA R.** Shape from Shading. M.I.T. Press, 89-122
- **LI J.C. ; TANKAM P. ; PENG Z. ; PICART P.** Digital holographic reconstruction of large objects using a convolution approach and adjustable magnification. *Optics Letters,* 2009, vol. 34, 572-574